Europäisches Patentamt

European Patent Office

Office européen des brevets

(19)

(11) Publication number: **0 022 884**

A1

(12) # EUROPEAN PATENT APPLICATION

(21) Application number: **79301432.5**

(22) Date of filing: **18.07.79**

(51) Int. Cl.³: **B 29 C 17/02**
**B 21 D 13/10, B 28 B 7/04**
**B 28 B 1/52, C 03 B 23/03**
**C 03 B 19/02, B 65 H 45/12**

(43) Date of publication of application:
28.01.81 Bulletin 81/4

(84) Designated Contracting States:
AT BE CH DE FR GB IT LU NL SE

(71) Applicant: **ASH & LACY LIMITED**
Alma Street
Smethwick, Warley West Midlands(GB)

(71) Applicant: **HOLGREEN LIMITED**
27 John Street
London, WC1N 2BL(GB)

(72) Inventor: **Lisborg, Niels**
2 Pond Place
London, SW 3(GB)

(74) Representative: **Attfield, Donald James**
BROOKES, MARTIN & WILSON Prudential Buildings 5
St. Philip's Place
Birmingham B3 2AF(GB)

(54) Method and apparatus for bending sheet material and bent sheet material obtained.

(57) Bending or folding a sheet of material (13; 30; 54, 64) from a flat into a three dimensional form, the sheet having groups of hinge lines 16, by means of two frame members (1, 2; 41, 42) movable vertically relative to each other, one frame (1; 42) having sheet supporting parts (11; 21; 61) mounted for movement in the plane of the frame and pivotally attached to one group of hinge lines (16) and the other frame (2; 41) having sheet supporting parts (11a, 11b, 22; 51) mounted for movement in the plane of the frame and pivotally attached to a second group of hinge lines (16) relative vertical movement of the frames (1, 2; 46 42) causing the sheet to bend about the hinge lines and assume the three dimensional form. Each frame (41, 42) and one sheet (54, 64) can form the upper and lower platens of a press in which means are provided to bring the sheets (54, 64) adjacent each other and simultaneously assume their three dimensional forms causing a deformable metal sheet sandwiched therebetween to be pressed into an identical shape.

FIG 1

0022884

-1-

The invention relates to an apparatus for folding or
bending a flat sheet of material.

The material of the sheet may be rigid or pliable and be,
for example, a metal or metal mesh, a plastics material, or
plastics mesh material.

In the instance where the sheet material is rigid the
sheet may be provided with one or more hinge lines and the
apparatus serves to fold the sheet about these lines. In the
instance where the sheet material is pliable the apparatus
may serve to deform the sheet by bending it.

According to the present invention there is provided an
apparatus for bending or folding a sheet of material from a
first condition in which the sheet is planar to a second
condition in which the sheet is non-planar and has a three-
dimensional configuration, characterised in that the apparatus
comprises a plurality of first parts and a plurality of second
parts, the first parts being movable relatively to the second
parts in a direction having a component perpendicular to the
plane of a sheet in its planar condition, the extremities of
this relative movement defining first and second stations of
the apparatus, the said first and second parts each being
movable in planes parallel to a said sheet in its planar
condition from a first position when the apparatus is in its
first station to a second position when the apparatus is in
its second station; means being provided to pivotally attach
said first and second parts to a said sheet and said first
and second parts each being arranged to carry a sheet in its
first planar condition in the first station of the apparatus and to cause said sheet to assume its three dimensional configuration in the second station of the apparatus, said three dimensional configuration having at least four facets, each facet having two rectilinear side edges which converge and extend contiguously with the side edges of two bordering facets, the side edges of the facets being peripherally disposed about a common point of convergance to form an apex of an anticlastic surface of which each facet co-operates with the bordering facets on each side, so that the facets are inclined to each other to form at least one convex and at least one concave surface.

In the preceding paragraph and throughout the remainder of the specification the term "anticlastic" is used to connote a shape having opposite curvatures at a given point.

In one arrangement of the apparatus the said first parts may carry one said sheet and the said second parts a second said sheet. In another arrangement said first and second parts may carry a single sheet, the parts being attached to the same side of the said sheet. Thus, one application of the apparatus of the invention is to changing of the shape of the variable shape shell mould described in British Patent Specification No. 1,540,823 which forms the said sheet of material and which includes hinge lines about which the sheet bends. As disclosed in that specification the shell mould has a support surface which, when in a first condition is flat, and, in use, is changed to a second condition in which the surface is three-dimensional.

For the purposes of the present invention a variable shape shell mould may be considered as comprising at least four rigid base parts which provide a support surface for supporting a deformable material, each base part having two rectilinear side edges which converge to provide an apical end portion, the end portions of the base parts being peripherally disposed about a common point of convergance with the convergent side edges of each base part extending contiguously with the adjacent side edges of base parts on each side, and adjacent side edges between each pair of adjacent base parts being hingedly connected together along a rectilinear hinge line, the base parts being movable between a first condition in which the surface is substantially planar and a second condition in which the surface is a three-dimensional anticlastic surface in which said common point of convergance comprises an apex, the portion of the surface provided by each base part comprising a facet, and each base part co-operating with adjacent base parts, on each side, so that the facets provided by these parts are inclined to each other to form convex and concave surface, the arrangement being such that when one of the base parts is displaced from their first condition, at least two other base parts are displaced substantially simultaneously therewith and exhibit pivotal movement about their rectilinear hingedly connected side edges.

In one method of use of the mould, as disclosed in the aforementioned patent application, the support surface when in its flat, first condition is covered with a settable material either in a viscous or sheet form and the moulding surface is subsequently changed to its three dimensional second condition in which the material is allowed to set.

In another method of use of the mould, using the apparatus of the first mentioned arrangement, a first mould support surface forms the lower platen of a hydraulically mechanically or pneumatically operated press and a substantially mirror image second mould forms the top platen thereof. This press may then be utilised to convert a deformable planar sheet of material, such as a sheet metal e.g. steel or aluminium into a three dimensional structure.

In this use the two support surfaces are initially spaced apart and are maintained in their planar configuration, being carried by support members movable across the respective platens in planes parallel to the support surface in its plane configuration. The sheet of deformable material, e.g. a sheet of metal is then rested on the lower support surface and the upper surface lowered under pressure such that the sheet is firmly held between the two surfaces. Under continued pressure the said surfaces are then simultaneously converted,

-4-

into their three dimensional configurations and the said sheet of deformable material likewise deformed, into a substantially similar three dimensional configuration.

Thus the invention also includes a method of bending or folding a sheet of deformable material characterised in that the said sheet of deformable material is positioned on a first variable-shaped shell mould provided with two groups of hinge lines and supported along one group of said hinge lines by movable first parts, a second variable shaped shell mould positioned against said deformable sheet on the other side thereof, said second variable shaped shell mould being a substantial mirror image of said first mould and carried by movable second parts located along the other group of hinge lines and said first and second moulds being caused to simultaneously adopt a three-dimensional configuration whereby the sheet of deformable material is converted into a like three-dimensional structure.

It can be seen that the upper and lower support surfaces cannot be exact mirror images one of the other, since allowance has to be made for the thickness of the deformable material held therebetween.

The present invention enables there to be provided moulding or press apparatus comprising an arrangement for supporting a substantially flat sheet material which in a first condition of the apparatus will lie in a pre-determined plane; the apparatus including support means through which a displacement force is intended to be imparted to said sheet material in a direction transverse to said plane for pivoting a part of the said sheet about a predetermined hinge line located within the extent thereof to provide in a second condition of the apparatus, the three-dimensional profile having the areas which form the facets of the anticlastic surface.

The present invention also includes a three-dimensional article when obtained by using the apparatus according to the present invention.

As previously mentioned the sheet material may provide a moulding surface on which a settable material may be cast and/ or moulded as described in British Patent specification No. 1,540,823 or the said sheet may itself be the material to be formed. In the latter instance; the sheet material will generally be self-supporting and may, for example, be a sheet or mesh of a metallic or an appropriate plastics material.

The hinge line in the sheet material may be predetermined by scoring the surface thereof as for example by etching or scratching. Alternatively, adjacent areas of the sheet material which form the facets of the anticlastic surface may be joined by one or more hinges which allow one of said parts to pivot about the other or the hinge lines about which the said sheet deforms to its three dimensional profile may be defined by the positioning of the support means relative to the said sheet, and the sequence and/or direction in which they move. As the sheet material is pivoted about each hinge line during adjustment from the first to the second condition of the apparatus at least part of the outer periphery of the said sheet will be retracted relatively inwardly from its position in the aforementioned predetermined plane, and therefore the said sheet should have some freedom to move in predetermined directions parallel to said plane during deformation. Such freedom of movement may be ensured by providing low frictional resistance to movement of the sheet material over the support means.

The support means for the sheet material may comprise a sheet which is placed on support members and on which the sheet material is laid when the apparatus is in its first condition, and which is able to deform into the required three dimensional profile. The support members may be raised or lowered as desired so that the apparatus may be adjusted from its first condition when the moulding sheet lies in its predetermined plane to its second condition when each support member is adjusted a predetermined amount to apply at the location of the support member on the sheet, a predetermined force which causes the sheet to take up its three dimensional profile.

0022884

-6-

The support member or members will generally be attached to jacking means, and in order to ensure that the sheet material takes up the required predetermined three dimensional profile in the second condition of the apparatus, the support member or members are required to be firmly attached to the moulding sheet. The support members will require to be movable, in the aforementioned plane, from their original position in the first condition of the apparatus to a further position in the second condition. Such movement may be allowed for by, for example, either providing the apparatus with a substantially smooth base and allowing sliding of the support member over the base (conveniently on low friction connector e.g. a ball race) or attaching the support member through a slot which extends along a predetermined path on the base, or providing a swivelling support member, or by attaching the support member to a track which latter is itself on tracks to allow lateral and longitudinal movement in a common plane.

The jacking means will generally be attached directly or indirectly to one or more of the support members and may, for instance be lever, screw, hydraulically or pneumatically operated.

When in the second condition at least one of the areas forming the facets of the anticlastic surface are in a plane other than parallel to the original plane of the sheet any attachment of a support member to the areas forming those facets must have the facility to swivel or pivot about the areas. Such attachment between an arch forming a facet and its support member or members may be by way of, for example, a hinge or a ball joint. Alternatively, where attachment is rigid, as for example by suction or magnetism, the facility to swivel may be incorporated into the support member itself or in its connection to the jacking means.

The jacking means will generally be pre-set or marked to give predetermined amounts of movement, and where there are several support members which, in the second condition, require to be moved simultaneously or through the same distance by the jacking means, these support members may be connected to a common jacking means.

A group of support members which is connected to a common jacking means may be carried by a common frame, and by providing several such combinations, the common frames may be run on respectively associated tracks so that the moulding or press apparatus as a whole is slidable along a predetermined path. When the apparatus is to be adjusted from its first to its second condition, the frames are moved over portions of such tracks which diverge from or converge to each other, as required, by a predetermined amount so that each group of support members may be substantially simultaneously raised or lowered respectively to provide the associated sheet material with its predetermined three dimensional profile.

Where, during adjustment from the first to the second condition of the apparatus, several support members are intended to be displaced through the same distance, these may be joined by means of, for example, an elongate bar to form a pressure edge which acts on the sheet material.

Occasionally, when the apparatus is being adjusted into its second condition, it may be necessary to hold parts of the sheet material in the original plane (when the apparatus is in its first condition), and this may be achieved, for instance, by using a further set of support members which abut the said sheet on the opposite side to those previously described, and are adapted to move as required under pressure from the jacking means.

Where the sheet material provides a surface for a settable material, there may be provided a corresponding backing sheet located directly above the said sheet and between which two sheets the settable material is sandwiched. Such corresponding backing sheet will generally be adapted to give the same three dimensional profile as the sheet material in the second condition of the apparatus, and may be displacable as a whole relative to the said sheet in order to allow the settable material to be removed when in its three dimensional profile.

Embodiments of the present invention will now be described, by way of example only, with reference to the accompanying illustrative drawings in which:

-8-

Figure 1 shows an exploded perspective view of a first embodiment of the apparatus of the present invention, in which two overlying frames are provided with support members carried on displacable cross-members for carrying a flat sheet of material to be shaped.

Figure 2 is a plan view of a second embodiment of the apparatus, in which the cross members are rigidly connected to a frame and the support members are displacable relative to the cross members.

Figure 3 is a section taken on the line of Figure 2.

Figure 4 is a section taken along a centre line of the platens of a press, being a third embodiment of the present invention.

In the following description the apparatus is described as relating to the folding or bending of sheets in general but, as previously mentioned, the apparatus is particularly intended for changing the shape of the variable shape shell mould disclosed in British Patent Specification No. 1,540,823 and as hereinafter described.

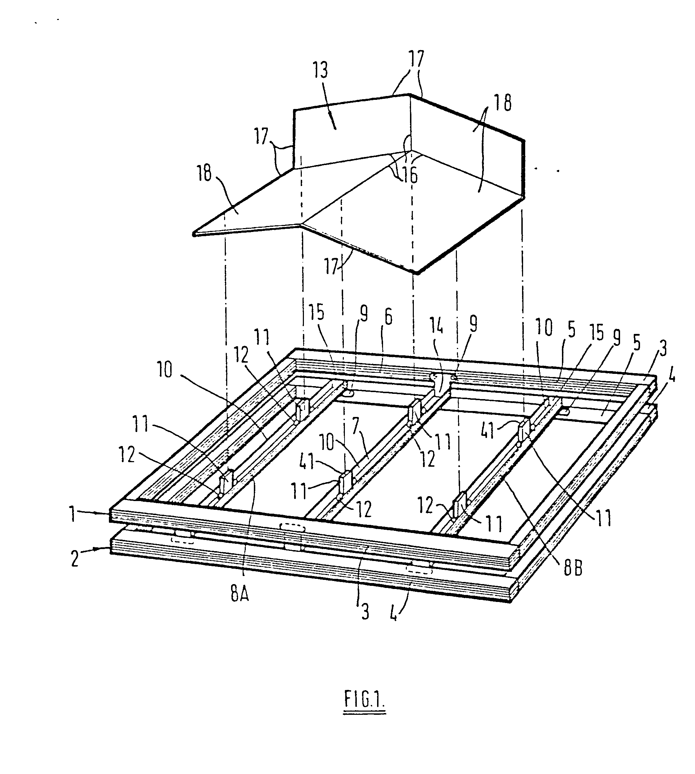

Figure 1 shows a simple form of the apparatus comprising a first frame 1 located above and overlying a second frame 2. Frames 1 and 2 are substantially rectangular having longitudinal sides 3 and 4 respectively, an innermost edge 5 of each of which is provided with a first track 6. A first crossmember 7 in frame 1, and second and third cross members (8a and 8b respectively) in frame 2 are able to run freely, by means of bearings 9, in the respective first tracks 6.

An upper most surface on each cross member 7, 8a and 8b carries a second track 10, 10(a) and 10(b) respectively, in each of which tracks two support members 11, 11(a) and 11(b) are able to run freely by means of bearings 12, 12(a) and 12(b). The support members 11, 11(a) and 11(b) are all of substantially the same size.

The apparatus shown in Figure 1 is intended to be adjusted from a first condition to a second condition by raising frame 1 relative to frame 2. Thus the second condition of the apparatus may be achieved by manually lifting frame 1.

In the first condition of the apparatus, frame 1 overlies and rests upon frame 2. In this condition, a flat sheet material 13 to be shaped (shown after shaping, located above the frame 1 for convenience) rests upon the support members 11 in flat plane defined by the uppermost ends 41 of the support members 11. Since the support members 11 are all of the same size, the cross members 7, 8a and 8b must also lie in one plane when the frame 1 is resting upon frame 2 and the apparatus is in its first condition. To this end the cross member 7 is mounted on frame 1 by means of a bracket 14 which supports said first cross member below the plane of frame 1, while cross members 8a and 8b are mounted on frame 2 by means of brackets 15 which support said second and third cross members above the plane of frame 2.

In the first condition of the apparatus, the flat sheet material 13 is located on the support members 11, 11(a) and 11(b) which are positioned in a predetermined array by movement of the cross members 7, 8a and 8b respectively in the tracks 6 and by movement of the said support members 11, 11(a) and 11(b) in the tracks 10, 10(a) and 10(b) respectively. In order to maintain the predetermined array the sheet material is attached to the said support members and, if the sheet contains magnetic material such attachment may be achieved magnetically. Alternatively, attachment may be by suction.

As shown the sheet 13 is provided with predetermined hinge lines 16 which define, together with the edges 17 of the sheet facet plate portions 18 as discussed in British Patent Specification No. 1,540,823 with reference to a variable shape shell mould. The hinge lines 16 may be defined by etching or scratching the surface of the sheet 13, or by providing hinges proper. Such hinges may be metallic, or of a plastics material such as polypropylene. Alternatively, the hinge lines may be omitted and the sheet subjected to bending by the support members 11, 11(a) and 11(b) when the upper frame 1 is raised.

As the frame 1 is lifted by jacking means (in the embodiment shown, manually) to adjust the apparatus from its first to its second condition and provide the sheet with its predetermined three dimensional profile, the sheet 13 deforms along the predetermined hinge lines 16 and the edges 17 move inwardly. Thus the support members 11, 11(a) and 11(b) move a corresponding amount in their respective planes depending upon the separating distance between frames 1 and 2, in the respective second tracks 10, 10(a) and 10(b) and similarly, the cross members 7, 8a and 8b move in their respective planes in first tracks 6. The support members 11, 11(a) and 11(b) may be attached to the sheet 13 either on any of the hinge lines 16 or to any of the facet plate portions 18 defined by the hinge lines 16 the side edges having a common point of convergence at apex 18(a). If the plane of frame 1 remains parallel to the plane of frame 2 during adjustment of the apparatus from its first condition to its second condition the point of attachment to the sheet 13 of each support member on frame 2 will remain in the original plane of the sheet 13, and similarly the point of attachment to the sheet 13 of each support member on frame 1 will be raised to the same height.

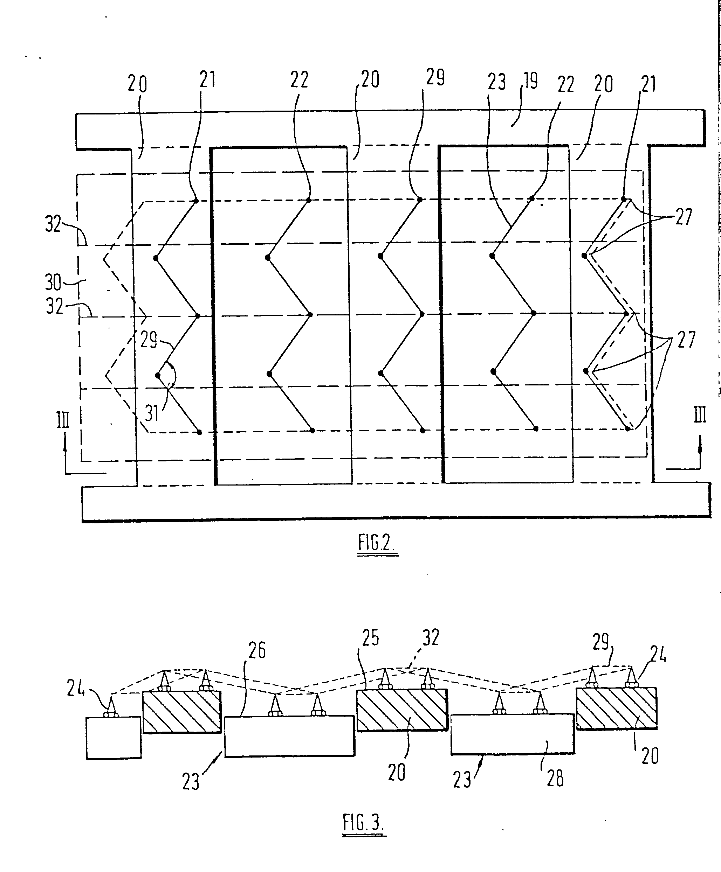

Figures 2 and 3 illustrate diagramatically a further embodiment of apparatus according to the invention, in which a movable frame 19 is provided with rigidly attached cross members 20, each such cross member carrying a plurality of sheet support members 21. Further sheet support members 22 are carried by a fixed base part 23 (shown in Figure 3) relative to which the frame 19 is adapted to be raised and lowered. In the first condition of the apparatus, the frame 19 and base part 23 are adapted to lie with their upper surfaces in one plane and the tops of the support members 21 and 22 are in a common plane. The frame 19 as a whole, raises or lowers each support member 21 simultaneously and to the same extent (assuming that the frame 19 is moved in a plane parallel to the plane of the base part 23) by for example, a hydraulic or pneumatic jacking means (not shown) to adjust the apparatus to its second condition.

Each of the support members 21 and 22 is provided with a ball race 24 on which it is able to move about the upper surface 25 of its respective cross member 20 and upper surface 26 of the base part 23 respectively. Each of the five support members 21 of a group 27 on a cross member 20, and each of the five support members 22 of a further group 27 on each portion 28 of the base part 23 between adjacent cross members 20, remains at the same height with respect to the other support members of the same group, and the distance between adjacent support members of the same groups remain unchanged during movement of the support members on the ball races 24 and independant of whether the apparatus is in its first or second condition. It is therefore convenient to join the tops of each adjacent pair of the support members in each group 27 by means of, for instance, a metal rod which provides a pressure-exerting edge 29 to act along a portion of the sheet 30 (shown in broken lines) which is to be displaced from the initial plane of the sheet. Preferably the pressure exerting edges 29 extend along predetermined hinge lines 32 of the sheet as shown in Figure 3.

In the instance when each support member is rigidly connected to the sheet 30 by means of, for example, suction or magnetism, it will be necessary for the rods forming each pressure-exerting edge 29 to be hinged at their junction with the support members.

In the first condition of the apparatus the sheet 30 will lie flat on the apparatus and the pressure-exerting edge 29 between each pair of support members of one group 27 will extend in a predetermined direction. As the frame 19 is raised or lowered to adjust the apparatus to its second condition, each of the support members 22 and 23 moves and the connected pressure-exerting edges 29 take up the zig-zag configuration shown with an angle 31 between interconnected edges 29. The greater the vertical distance between the frame 19 and base part 23 is, the smaller will be the angle 31 between interconnected pressure-exerting edges.

In the embodiment illustrated in Figures 2 and 3, the angle 31 between interconnected pressure-exerting edges 29 is the same throughout the extent of the sheet, and the distance

-12-

between adjacent groups of pressure-exerting edges 29 is substantially the same, and the pressure edges may be located along predetermined hinge lines 32 of the sheet-shown in Figures 2 and 3.

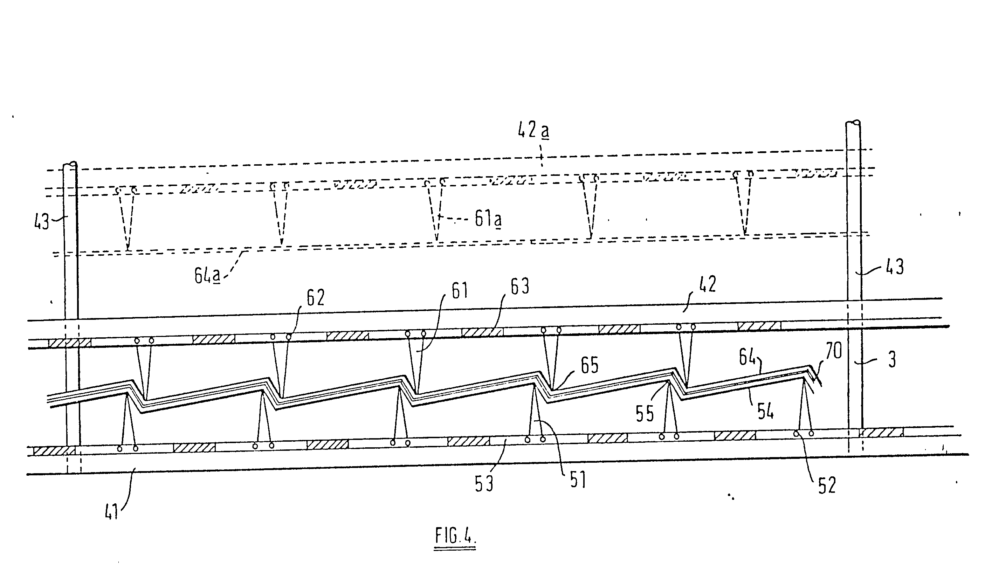

In the press of Figure 4, illustrated in solid outline at the end of a power stroke, a lower platen 41 and an upper platen 42 are carried on guide pillars 43. Support members 51 and 61 are carried on ball races 52 and 62 located for movement within tracks 53 and 63 formed in platens 41 and 42 respectively. Said movement having components of motion along a track and at right angles to the length of a track.

A first variable shape shell mould 54 is attached to movable supports 51 through pivotal connectors 55. The surface area which form the facets of the anticlastic surface when the mould is in its second three-dimensional configuration are joined by groups of hinges and the attachments are made adjacent one group of such hinges.

A second variable shaped shell mould 64, being substantially a mirror image mould 54, is similarly attached to supports 61 via pivotal connectors 65, the attachments being made adjacent a second group of hinges. The arrangement is similar to that illustrated in the embodiment described with reference to Figures 2 and 3, except that in the embodiment described with reference to those figures, all attachments are made on one side of a single sheet 30, which may also be a variable shape shell mould.

A sheet of deformable material, 70 is positioned between moulds 54 and 64 and is shown deformed into a three-dimensional configuration.

In operation the upper plate 42 is initially in the position shown in dotted outline at 42a and the movable supports 61a as shown in dotted outline, generally outwardly of their final positions. In this positin the variable shape shell mould 64a is in its planar first condition.

Similarly the variable shape shell mould 54 is also in its planar condition and the movable supports are positioned outwardly of their final (shown) position.

-13-

The sheet 70, in a flat condition, is placed on the lower variable shaped shell mould 54. The upper platen is the caused by hydraulic means, (not shown) to travel down the guide pillars until the mould 64 presses on the sheet 70. Continued application of pressure then causes moulds 54 and 64 simultaneously to adopt their second three dimensional configurations. Thus pressing sheet 70 into a similar three-dimensional configuration. As the moulds adopt their three dimensional configuration supports 51 and 61 move inwardly to allow for the progressive overall reduction in width of the moulds.

CLAIMS:

1.   Apparatus for bending or folding a sheet of material (13: 30; 54, 64) from a first condition in which the sheet is planar to a second condition in which the sheet is non-planar and has a three dimensional configuration, characterised in that the apparatus comprises a plurality of first parts (11 21; 51) and a plurality of second parts (11a, 11b, 21, 51) the first parts being movable relatively to the second parts in a direction having a a component perpendicular to the plane of a sheet in its planar condition, the extremities of this relative movement defining first and second stations of the apparatus, the said first and second parts each being movable in planes parallel to a said sheet in its planar condition from a first position when the apparatus is in its first station to a second position when the apparatus is in its second station; means (65, 55) being provided to pivotally attach said first and second parts to a said sheet and said first and second parts each being arranged to carry a sheet in its first planar condition in the first station of the apparatus and to cause said sheet to assume its three dimensional configuration in the second station of the apparatus, said three dimensional configuration having at least four facets (18), each facet having two rectilinear side edges which converge and extend contiguously with the side edges of two bordering facets, the side edges of the facets being peripherally disposed about a common point of convergance to form an apex (18a) of an anticlastic surface of which each facet co-operates with the bordering facets on each side, so that the facets are inclined to each other to form at least one convex and at least one concave surface.

2.   Apparatus according to claim 1 characterised in that the sheet of material (13; 30, 54, 64) for use therewith is provided with one or more hinge lines (16) about which the sheet is to be folded by the apparatus, the said first (11, 22, 51) and second parts (11a, 11b, 21, 61) having means (65, 55) for connecting the parts to the said hinge line or lines.

3. Apparatus according to claims 1 or 2 characterised in that it comprises first and second superimposed relatively movable rectangular frames (1,2) each frame having at least one cross member (7, 8a and 8b) extending parallel to one of its sides and movable along tracks (6) on the frame in a direction perpendicular to the said side, the or each cross member of the first frame supporting a plurality of said first parts (11) and the or each cross member of the second frame supporting a plurality of said second parts (11a,11b) and the said parts being movable along tracks (10, 10a and 10b) on the cross members in a direction parallel to the cross members.

4. Apparatus according to claim 1 or claim 2 chacterised in that it comprises a fixed base (23) carrying a plurality of said second parts (22) and a movable frame (19) carrying a plurality of said first parts (21) the said first parts and the said second parts each being arranged in a plurality of alternating groups (27) such that the said parts comprising each group are disposed in a geometric configuration when the apparatus is viewed in plan, each group being spaced from the other in a direction parallel to the plane of said sheet in its planar condition.

5. Apparatus according to claim 4 characterised in that in said first station of the apparatus the upper surfaces of the fixed base and movable frame are in substantially the same plane and said first and second parts are attached to the same side of the said sheet.

6. Apparatus according to claim 4 characterised in that said fixed base is the lower platen (41) of a press and said movable frame is the upper platen (42) of said press, a first sheet (64) being carried by said first parts (61)

-3-

and a second sheet (54) carried by said second parts (51), said sheets being substantially mirror-image variable shape shell moulds each provided with first and second groups of hinge lines disposed in geometric configuration, the said first parts being attached to said first groups of hinge lines on said frist sheet and said second parts being attached to said second group of hinge lines on said second sheet, means being provided to cause said upper platen to press down on said lower platen causing said first and second sheets to simultaneously adopt complimentary three dimensional configurations, whereby a sheet of deformable material (70) placed between said upper and lower platens is deformed into a three dimensional configuration.

7.    Apparatus according to claims 4, 5 or 6 characterised in that the said first parts (11; 21; 61) and the said second parts (11a, 11b, 22; 51) are respectively mounted by means of a low friction connector (24, 62, 52) to permit movement of the said parts in the plane parallel to the sheet in its planar condition and in directions having components parallel to adjacent sides of the respective race and frame, and the said parts of each group are pivotally connected together, the pivotal connects acting as force-exerting or folding edges, (29) on the sheet (30) to change the sheet from its first condition to its second condition.

8.    A sheet of deformable metal having a three dimensional configuration whenever produced by the apparatus of claim 6.

9.    'A method of bending or folding a sheet of deformable material characterised in that the said sheet of deformable material is positioned on a first variable shaped shell mould provided with two groups of hinge lines and supported along one group of said hinge lines by movable first parts, a second variable shaped shell mould positioned against said deformable sheet on the other side thereof, said second variable shaped shell mould being a substantial mirror image

-4-

of said first mould and carried by movable second parts located along the other group of hinge lines, and said first and second moulds being caused to simultaneously adopt a three dimensional configuration whereby the sheet of deformable material is converted into a like three dimensional structure.

FIG.1.

0022884

FIG.2.

FIG.3.

0022884

FIG. 4.

European Patent Office

**EUROPEAN SEARCH REPORT**

Application number

EP . . . . 2

| | DOCUMENTS CONSIDERED TO BE RELEVANT | | CLASSIFICATION OF THE APPLICATION (Int Cl ³) |
|---|---|---|---|
| Category | Citation of document with indication, where appropriate, of relevant passages | Relevant to claim | |
| X | US - A - 4 052 948 (G.T. STRAZA)  * Whole document *  -- | 1,2,6, 8,9 | B 29 - 17,/?2 B 21 F 13/10 B 28 P 7/0- 1/52 C 03 B 23/ ?3 19/?1 B 65 H 45/12 |
| X | DE - B - 2 023 775 (DEUTSCHE TAFEL GLAS)  * Whole document *  -- | 1,2,4, 5,7,8 | |
| | FR - A - 1 148 433 (J.L. FONTAINE)  * Whole document *  -- | 1,2,6, 8,9 | **TECHNICAL FIELDS SEARCHED (Int.Cl ³)** |
| | FR - A - 1 463 640 (M.A. HARTMAN)  * Figures 10-12 *  -- | 6,8,9 | B 29 C 17/C0 B 21 P 13/CC B 28 E 1/00 7/00 B 28 F 1/00 C 03 B 19/00 23/00 D 06 . 1/0? B 65 H 45/00 B 31 F 3/00 |
| | US - A - 2 481 049 (A.J. STAMM)  * Whole document *  -- | 7 | |
| A | FR - A - 1 352 149 (L.V. GEWISS) | | |
| A | FR - A - 1 232 100 (CHEMSTRAND) | | |
| A | GB - A - 1 250 314 (G. WARREN)  ---- | | **CATEGORY OF CITED DOCUMENTS**  X. particularly relevant  A. technological background  O. non-written disclosure  P intermediate document  T theory or principle underlying the invention  E. conflicting application  D document cited in the application  L. citation for other reasons |
| | | | &. member of the same patent family. corresponding document |

☒ The present search report has been drawn up for all claims

| Place of search | Date of completion of the search | Examiner |
|---|---|---|
| The Hague | 18-03-1980 | LABEEUW |

EPO Form 1503.1  06.78

BAD ORIGINAL